**Europäisches Patentamt**

**European Patent Office**

**Office européen des brevets**

(19)

(11) Publication number : **0 284 333 B1**

(12)                  # EUROPEAN PATENT SPECIFICATION

(45) Date of publication of patent specification :
29.11.95 Bulletin 95/48

(51) Int. Cl.[6] : **H01M 10/34,** H01M 4/52, H01M 4/38

(21) Application number : **88302472.1**

(22) Date of filing : **22.03.88**

(54) **Sealed type nickel-hydride battery and production process thereof.**

(30) Priority : **25.03.87 JP 70609/87**
**17.11.87 JP 290019/87**

(43) Date of publication of application :
**28.09.88 Bulletin 88/39**

(45) Publication of the grant of the patent :
**29.11.95 Bulletin 95/48**

(84) Designated Contracting States :
**DE FR GB**

(56) References cited :
**FR-A- 2 382 776**
**JP-A-59 154 779**
**JP-A-61 110 966**
**PATENT ABSTRACTS OF JAPAN, vol. 12, no.**
**244 (E-631)[3091], 9th July 1988**
**PATENT ABSTRACTS OF JAPAN, vol. 12, no.**
**204 (E-620)[3051], 11th June 1988**
**PATENT ABSTRACTS OF JAPAN, vol. 10, no.**
**263 (E-435)[2319], 9th September 1986**
**PATENT ABSTRACTS OF JAPAN, vol. 10, no.**
**209 (E-421)[2265], 22nd July 1986**

(73) Proprietor : **MATSUSHITA ELECTRIC**
**INDUSTRIAL CO., LTD.**
**1006, Ohaza Kadoma**
**Kadoma-shi, Osaka-fu, 571 (JP)**

(72) Inventor : **Ikoma, Munehisa**
**5-303 Myokenzaka 3-chome**
**Katano**
**Osaka (JP)**
Inventor : **Kawano, Hiroshi**
**1-62-7 Higashiohta 4-chome**
**Ibaraki**
**Osaka (JP)**
Inventor : **Ito, Yasuko**
**8-256 Shibayama Kansyuji**
**Yamashina-ku**
**Kyoto (JP)**
Inventor : **Matsumoto, Isao**
**8-10 Ueshio 3-chome**
**Tennoji-ku**
**Osaka (JP)**

(74) Representative : **Spencer, Graham Easdale et**
**al**
**A.A. Thornton & CO**
**Northumberland House**
**303-306, High Holborn**
**London WC1V 7LE (GB)**

EP 0 284 333 B1

## Description

The present invention relates to a sealed nickel-hydride battery comprising a positive electrode having nickel hydroxide as the active material thereof, a negative electrode comprising a hydrogen storing alloy which is capable of absorbing and desorbing hydrogen electrochemically, a separator, and an alkaline electrolyte.

Lead acid sealed batteries and nickel-cadmium sealed batteries are in wide use at present. The former are inexpensive, but in consideration of their weight efficiency/whkg$^{-1}$, cycle life, and other characteristics, it is inconvenient to use lead acid batteries as a power source for portable apparatuses which are used for long periods of time. On the other hand, although nickel-cadmium batteries are relatively expensive, they are substantially free of the defects of lead acid batteries and the demand for nickel-cadmium batteries are increased remarkably of late. These batteries are, in particular, widely used in fields requiring high reliability.

There is an urgent requirement for batteries having the same general characteristics as nickel-cadmium batteries, but having a higher energy density. Attention is recently been directed to nickel-hydride batteries having a negative electrode comprising a hydrogen absorbing alloy which is capable of absorbing and desorbing hydrogen as an active material electrochemically, instead of a cadmium electrode. Such hydrogen absorbing alloy electrodes have a higher energy density per unit volume than cadmium electrodes. In this respect, while having the same volume as a cadmium battery, a battery may be made with a negative electrode of smaller dimensions than that of a cadmium battery and the volume of the positive electrode can be correspondingly increased so that a higher energy density should be realizable.

As disclosed in US-A-4214043, for example, a sealed nickel-hydride battery has a negative electrode which has a larger capacity than that of the positive electrode so that there will always exist a precharged section (electrochemically active portion) at the negative electrode after complete discharge of the positive electrode.

The reason for this is that as compared with the nickel positive electrode, the negative electrode using a hydrogen absorbing alloy is generally inferior in the high rate discharge property, and a precharged section is provided on the negative electrode side in advance to limit the battery capacity to the capacity of the positive electrode. This prevents the negative electrode from reaching a fully discharged state or an over-discharged state after the discharge of the battery so as to ensure that the cycle life of the battery is not determined by a dissolution of the alloy of the negative electrode.

In this regard, the following methods have been proposed for making a sealed battery provided with a precharged section at its negative electrode.

(1) As with a cadmium negative electrode, a negative electrode is charged electrochemically in an alkaline aqueous solution to set up a precharged section in the negative electrode, and the negative electrode is then wound in a spiral together with a separator and a nickel positive electrode, the assembly is placed in a case, of an electrolyte is infused into the case, and the case is sealed to form a battery.

(2) An alloy is ground through a hydrogen absorbing and desorbing operation, and some of the hydrogen used is absorbed into the alloy, i.e. a negative electrode is made of alloy powders having precharged sections, and a sealed battery is made in the same manner as described above (Japanese Patent Publication No.62-154582).

(3) The positive and negative electrodes and a separator are wound in spiral and the assembly is inserted into a cylindrical case with the subsequent infusion of an electrolyte. A quantity of hydrogen gas necessary to establish a precharged section in the negative electrode is filled into the battery, the battery is sealed, and a precharged section is established by a repeated charge and discharge so that a complete battery is formed (US-A-4314043).

Methods (1) and (2) require a complicated operation using a conventional negative electrode. In these methods, there is a risk that the active alloy with absorbed hydrogen may ignite on exposure to air prior to the formation of the battery, and even if the alloy does not ignite, the absorbed hydrogen may be dispersed into the atmosphere thereby making it difficult to obtain a desired quantity of hydrogen in storage. In method (3) a precharged section is formed at the negative electrode with hydrogen gas sealed inside the battery at the formation of the latter. The battery must be sealed in a hydrogen gas environment under high pressure; this inevitably requires complicated production procedures.

Japanese Published Patent Application 63-32856 describes a sealed nickel-hydrogen battery in which the positive electrode is formed from a mixture of non-sintered nickel and cobalt metal powder and the negative electrode is a hydrogen storage alloy which is not charged. By increasing the proportion of cobalt metal in the positive electrode, the charging capacity of the negative electrode is increased with respect to that of the positive electrode.

Japanese Published Patent Application 63-4568 describes a secondary battery in which the positive electrode is formed of a mixture of nickel hydroxide and 10 to 30 wt. % of cobalt metal powder (based on the weight of the nickel hydroxide) and the negative electrode is formed of cadmium oxide. The battery is made by separately forming the positive and negative electrodes, winding them together, inserting them into a can, injecting alkaline electrolyte into the can and then sealing the latter.

An object of the present invention is to provide a sealed nickel hydride battery comprising positive and negative electrodes which can be made simply and in which the battery capacity is limited by the positive electrode capacity, the battery being of high capacity and having a highly efficient discharge characteristic.

According to one aspect of the present invention, there is provided a sealed nickel-hydride battery which comprises:

(i) a positive electrode comprising nickel hydroxide ($Ni(OH)_2$) as the active material thereof and cobalt and/or cobalt oxide having an oxidation potential lower than that of the nickel hydroxide,

(ii) a negative electrode comprising a hydrogen-storing alloy capable of absorbing and desorbing hydrogen electrochemically, the negative electrode not having been subjected, prior to sealing of the battery, to sufficient pre-charging as is required to ensure the capacity of the battery is limited by the capacity of the positive electrode,

(iii) an alkaline electrolyte, and

(iv) a separator,

characterised in that the cobalt and/or cobalt oxide present in the positive electrode is in the form of fine particles having an average particle size of $10\mu m$ or less.

At the initial charge of this battery, the cobalt and/or cobalt oxide contained in the positive electrode is/are the first to be charged because its oxidation potential is lower than that of the active material ($Ni(OH)_2$) and the cobalt/cobalt oxide is oxidized to form stable oxides ($Co_2O_3$, etc). These stable cobalt oxides are not affected by any subsequent discharge and charge. It follows that the negative electrode, which only acts to absorb hydrogen as the active material during the initial charge, will be over-charged by the quantity of electricity necessary for oxidation of the cobalt and/or cobalt oxide having an oxidation potential lower than that of $Ni(OH)_2$ contained in the positive electrode. It will be seen therefore that only an initial charge is necessary to form a precharged section in the negative electrode corresponding to the amount of electricity required to convert the cobalt and/or cobalt oxide.

According to another aspect of the invention, there is provided a process for making the sealed nickel-hydride battery according to the invention, in which:

(i) the positive electrode is made by:

(a) kneading a mixture of nickel hydroxide and cobalt and/or cobalt oxide having an oxidation potential lower than that of nickel hydroxide, the cobalt and/or cobalt oxide being in the form of fine particles having an average particle size of $10\mu m$ or less, in a solvent to form a paste,

(b) impregnating, applying or forcing the paste into or onto a supporter to form a plate, and

(c) pressing the plate to a predetermined thickness and then drying it and cutting it to a predetermined size;

(ii) the negative electrode is made by:

(a) grinding the hydrogen-storing alloy into a powder,

(b) kneading the powdered alloy in a solvent to obtain a paste and impregnating, applying or forcing the paste into or onto a supporter to form a plate, and

(c) pressing the plate to a predetermined thickness and then drying it and cutting it to a predetermined size;

(iii) forming an assembly comprising one or more positive electrode plates, one or more separators, one or more negative electrode plates, and an alkaline electrolyte in a container; and

(iv) sealing the container.

In the following description reference will be made to the accompanying drawings, in which:

Fig. 1 is a view showing the structure of an embodiment of the sealed battery in accordance with the present invention,

Fig. 2 is a graph showing the charge-discharge cycle life of a sealed nickel-hydride battery of the present invention using a nickel positive electrode containing cobalt powders (made from cobalt carbonyl by reduction) having an oxidation potential lower than that of $Ni(OH)_2$,

Fig. 3 is a graph showing the cycle life of batteries having positive electrodes containing cobalt powder of various particle sizes,

Fig. 4 is a graph showing the cycle life of batteries having positive electrodes containing various amounts of cobalt with a fixed particle size.

The following examples are given by may of illustration only :

## EXAMPLE 1

Substantially spherical powders of $Ni(OH)_2$ with an average particle size of 19 $\mu m$ are used as an active material for the positive electrode. 100 Parts by weight of this $Ni(OH)_2$ are mixed with 8 parts by weight of cobalt powder (made from cobalt carbonyl by reduction) having an oxidation potential lower than that of $Ni(OH)_2$ and an average particle size of 5 $\mu m$, and the mixture is kneaded with water to obtain a paste. The paste is filled into a formed nickel sheet-like matrix having a three-dimensional network structure and a porosity of about 95% and a thickness of 1.5 mm. After drying at a temperature of 100°C, the plate obtained is pressed to an average thickness of 0.72 mm and is cut to a dimension of 39 by 65 mm to form a nickel positive electrode containing cobalt powders having an oxidation potential lower than that of $Ni(OH)_2$ with a theoretical capacity of 1070 mAh.

Using the same method, nickel positive electrodes are made from (i) 100 parts by weight of the $Ni(OH)_2$ and 3 parts by weight of $Co(OH)_2$ powder and 5 parts by weight of the previously mentioned Co powder having an oxidation potential lower than that of $Ni(OH)_2$, and (ii) 100 parts by weight of the $Ni(OH)_2$ and 8 parts by weight of $Co(OH)_2$ powder having an oxidation potential lower than that of $Ni(OH)_2$.

Negative electrodes are made as follows.

A misch metal (Mm) principally composed of about 40% by weight of cerium, about 30% by weight of lanthanum, and about 13% by weight of neodymium, and additionally weighed quantities of nickel, cobalt, aluminum and manganese to give an atomic ratio of 1:3.55:0.75:0.3:0.4 are melted in a high frequency furnace to obtain a hydrogen storage alloy composed of $Mm\ Ni_{3.55}Mn_{0.4}Al_{0.3}Co_{0.75}$. This alloy is heat-treated in an atmosphere of argon at a temperature of 1050°C to increase the homogeneity of the sample. The alloy is then ground mechanically to form a powder having an average particle size of 20 $\mu m$. The alloy powder is kneaded with an aqueous solution containing 1.5% in weight of polyvinyl alcohol to form a paste, which is filled into a foamed nickel matrix having a thickness of 0.9 mm. After drying at 100°C, the foamed nickel matrix impregnated with the alloy paste is pressed into a plate with an average thickness of 0.5 mm. The plate is cut to a dimension of 39 by 80 mm to obtain a negative electrode free from hydrogen as an active material having a theoretical capacity of 1600 mAh.

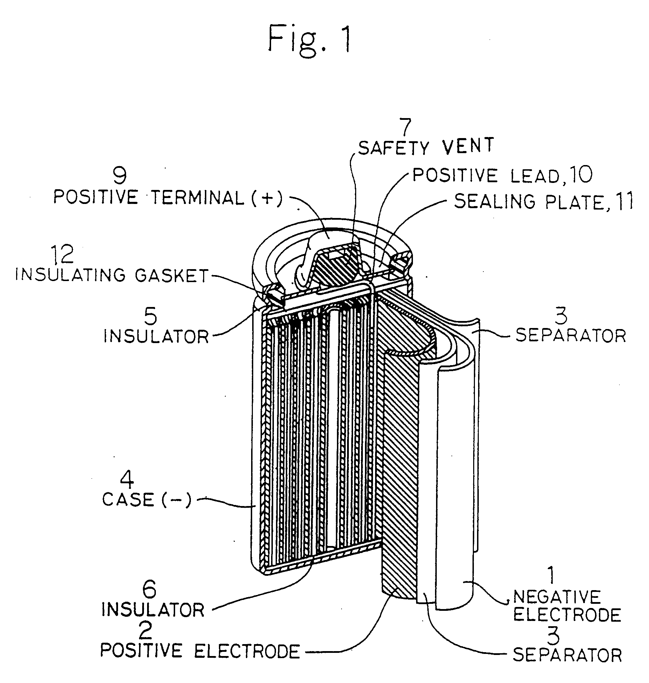

The positive and negative electrodes formed in this manner are spirally wound with a separator made of non-woven polyamide fabric between them and the wound assembly is then packed in an AA size battery case, into which 2.2 $cm^3$ of 7.1 normal aqueous KOH solution is poured, and the case is finally sealed. A-1 is a battery comprising a nickel positive electrode containing cobalt powder as first described above, A-2 is a battery having a nickel positive electrode containing cobalt and $Co(OH)_2$ powders as next described above, and A-3 is a battery having a nickel positive electrode containing $Co(OH)_2$ powder as last described above. Fig. 1 is a diagrammatic view of a battery thus made. Since the negative electrode is in direct contact with the case 4, the latter also acts as the negative terminal.

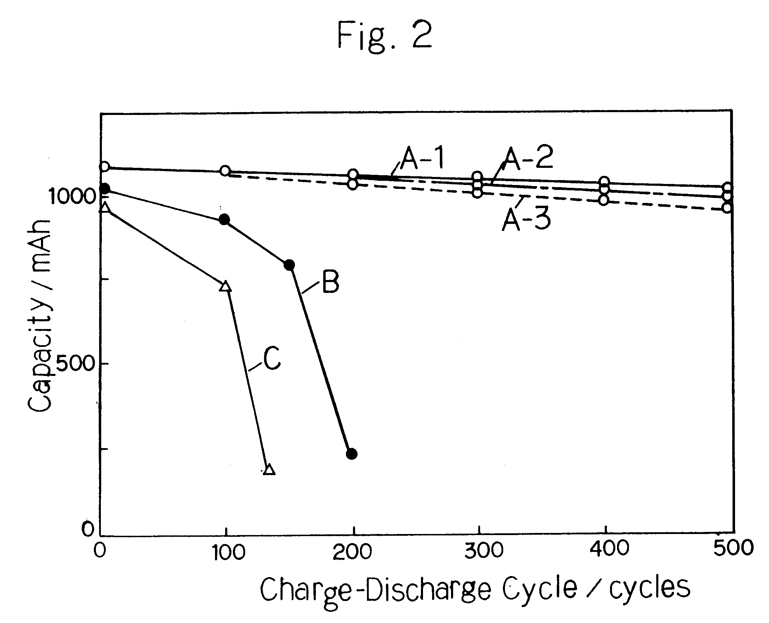

These batteries are first charged at 100 mA in an atmosphere at 20°C for 15 hours and then discharged at 200 mA until the voltage is reduced to 1.0 V. The batteries are then recharged at 330 mA and discharged with a constant current of 500 mA, until the voltage is reduced to 1.0 V, and this charge and discharge cycle is repeated until the life test for these batteries is completed. Fig. 2 illustrates the relationship between the number of charge and discharge cycles and the discharge capacity of the various batteries (A-1, A-2, A-3), that is, the results of the cycle life test described above. A sealed battery (B) including a combination of an alloy negative electrode which had already been charged with about 400 mAh before forming the battery and a positive electrode consisting of cobalt powder made from cobalt carbonyl by reduction, and a sealed battery (C) comprising an alloy negative electrode which did not include a precharged section and a positive electrode not including cobalt powder made from cobalt carbonyl by reduction are used as comparative examples.

It will be seen from the curves of Fig. 2 that battery A-1 in accordance with the present invention has such a good charge and discharge cycle life as to almost show no reduction in the discharge capacity even after 500 charge and discharge cycles due to the fact that hydrogen substantially corresponding to the charge capacity of cobalt (that is about 350 mAh in this case) remains in the alloy negative electrode after discharge. Batteries A-2 and A-3 also show almost no reduction in the discharge capacity even after 500 charge and discharge cycles due to the fact that the negative electrodes contain absorbed hydrogen substantially corresponding to charge capacities of about 250 mAh and about 175 mAh, respectively, of the cobalt and $Co(OH)_2$ powders present in the positive plates. On the other hand, there is a 50% reduction in the initial capacity was seen with battery B at about 120 cycles and with battery C at about 180 cycles. The capacity reduction of battery B is attributed to the fact that the provision of a precharged section in the negative electrode before sealing of the battery causes dispersion of the majority of the hydrogen, thus resulting in only a trace of the hydrogen remaining in the negative electrode of the battery after discharge. In the case of battery C, it is presumed that since the negative electrode of battery C does not include a precharged section, some of the metals present in the hydrogen storage alloy have been dissolved as to cause an earlier reduction in the capacity.

If the average particle size of the spherical nickel hydroxide powder used is smaller than 10 μm, the crystal structure of the nickel hydroxide is broken down in response to repeated charge and discharge cycles, thus reducing the cycle life. It is also found that when the average particle size of the nickel hydroxide is larger than 30 μm, the utilization of the active material is reduced, resulting in a reduction in the energy density. The optimum average particle size range of the nickel hydroxide is therefore 10 - 30 μm.

The above results show that negative electrodes can be used without any formation steps (such as charge and discharge, or absorption and desorption of hydrogen) prior to sealing of the battery due to use of the positive electrode containing cobalt and/or $Co(OH)_2$ powders whose oxidation potential is lower than that of $Ni(OH)_2$.

## EXAMPLE 2

Whilst the composition of the paste of the positive electrode is the same as in Example 1, various positive plates were made with cobalt powders having different average particle sizes within the range of 2 to 20 μm. The cobalt powders all have an oxidation potential lower than that of $Ni(OH)_2$ and the amount of the powder used, is 8 parts by weight in each case. Batteries were made using these positive electrodes in the same way as in Example 1. Table 1 shows the average particle size of the cobalt powder and the battery numbers.

Table 1   Relation between Battery Numbers
and Average Particle Sizes

| Battery Numbers | a-1 | a-2 | a-3 | a-4 | a-5 |
|---|---|---|---|---|---|
| Average Particle Sizes of Cobalt (μm) | 20 | 15 | 10 | 7 | 2 |

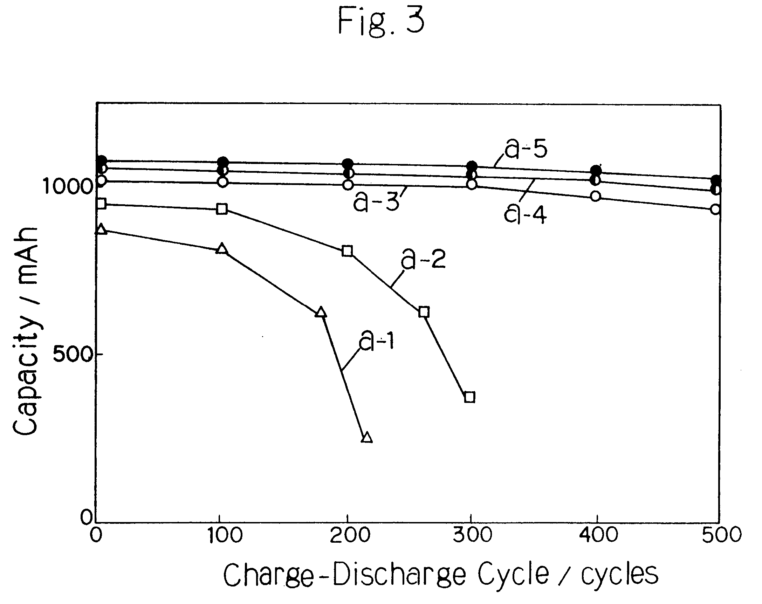

Fig. 3 shows the result of a cycle life test carried out with the batteries under the same charge and discharge conditions as in Example 1. The initial discharge operation is also carried out in the same way as in Example 1.

The results in Fig. 3 show that after a 500 charge and discharge cycles, there is little change to the capacities of batteries a-3, a-4, and a-5 which indicates that these batteries have long charge and discharge cycle lives. However, batteries a-1 and a-2 comprising positive electrodes containing cobalt powders having an average particle size of 15 μm and greater, a substantial reduction in their capacities is seen, as compared with batteries a-3, a-4 and a-5. This is because cobalt having a large average particle size is hard to oxidize electrochemically, that is the particles are not subjected to oxidation right through their thickness. It follows from this that if the particle size of the cobalt used is more than 10 μm, the quantity of electricity with which the negative electrode is pre-charged during the initial charge will be less than 70 mAh. Consequently, only a small amount of hydrogen remains within the hydrogen storage alloy constituting the negative electrode after discharge of the battery. Following discharge of the battery, a dissolution or oxidation of the metals constituting this alloy will take place; this phenomenon repeatedly occurs in response to repetitions of the charge and discharge cycle.

The use of cobalt powders having an average particle size of 10 μm or less than 10 μm, on the other hand, prolongs battery life.

## EXAMPLE 3

With the composition of the paste of the positive electrode the same as in Example 1, various positive plates were made using different amounts of cobalt powder within the range of from 1.0 to 15 parts by weight, the cobalt powders having an oxidation potential lower than that of $Ni(OH)_2$ and a standard particle size of 5 μm. Batteries were made with these positive electrodes in the same manner as in Example 1. Table 2 shows the amount of cobalt powder contained in the positive electrode and the battery numbers. Table 2 also shows Cc/Cp values, Cc being the chargeable capacity of the cobalt powder and Cp the chargeable capacity of the positive electrode. The chargeable capacity Cc is a measure of the quantity of electricity found remaining in the precharged section of the negative electrode when the battery was broken open after being charged at 100 mAh for a period of 15 hours and their discharged at 200 mAh until its voltage dropped to 1.0 V.

Table 2  Relation between the Added Amount of Co and Cc, Cc/Cp as well as capacity ratio

| Battery Nos. | Added amount of cobalt | Cc (mAh) | Cc/Cp | Capacity ratio (%) |
|---|---|---|---|---|
| b-1 | 1.0 | 50 | 0.05 | 80 |
| b-2 | 2.0 | 87 | 0.08 | 85 |
| b-3 | 2.5 | 107 | 0.100 | 90 |
| b-4 | 4.6 | 200 | 0.187 | 92 |
| b-5 | 8 | 350 | 0.327 | 92 |
| b-6 | 10 | 429 | 0.40 | 93 |

wherein the Cp value is 1070 mAh.

These batteries were subjected to initial charge and discharge in an atmosphere at 20°C under the same conditions as in Example 1. The batteries were then recharged at 20°C at a constant current of 100 mA and discharged at a constant current of 200 mA until its terminal voltage was reduced to 1.0 V in order to determine the nominal capacity. This was followed by another recharging and discharging at 1,000 mA under the same conditions to determine the battery capacities when the terminal voltage was 1.0 V. The capacity ratio was obtained on the basis of the 200 mA discharging capacity. The result is shown in Table 2.

As will be apparent from Table 2, if the added amount of cobalt powder is less than 2.5 parts by weight, the capacity ratio will be less than 90%.

On the other hand, batteries b-3, b-4, b-5, b-6 have a capacity ratio of more than 90%, thereby showing a very good discharge characteristic. The capacity of the positive electrode on discharging at 1000 mA is 90 - 93% of the capacity on discharging at 200 mA. Batteries b-1 and b-2 have a capacity ratio of less than 90% indicating that the battery capacity is limited by the capacity of the negative electrode.

Life tests carried out on these batteries using the same procedure as in Example 1 with 200 charging/discharging cycles were found to reduce the capacity to 50% of the original capacity. The addition of more than 10 parts by weight of cobalt powder to 100 parts by weight of positive active material is considered to be of low industrial value in view of its cost. It is preferred to add 2.5 - 10 parts by weight of cobalt powder having a oxidation potential lower than that of $Ni(OH)_2$ to 100 parts by weight of $Ni(OH)_2$ so that the relationship of $0.1Cp \leq Cc \leq 0.4Cp$ is maintained.

EXAMPLE 4

Various batteries were made in the same way as in Example 1, having nickel positive electrodes made of the same compositions of the paste as in Example 1 except for different added amounts of cobalt powder with an average particle size of 5 $\mu$m. Table 3 shows the chargeable capacity Cp of the nickel positive electrode, the chargeable capacity Cc of the cobalt powder, and the chargeable capacity Cn of the negative electrode of the sealed batteries prior to the start of initial charging.

Table 3: Cp, Cc and Cn values
before start of initial charging

| Battery Nos. | Cp (mAh) | Cc (mAh) | Cn (mAh) | Cn/Cp | Cc/Cp |
|---|---|---|---|---|---|
| c-1 | 1010 | 100 | 1110 | 1.09 | 0.10 |
| c-2 | 1050 | 300 | 1575 | 1.5 | 0.28 |
| c-3 | 1020 | 100 | 1122 | 1.1 | 0.10 |
| c-4 | 1000 | 300 | 2000 | 2.0 | 0.30 |
| c-5 | 920 | 300 | 2208 | 2.4 | 0.33 |
| c-6 | 1000 | 50 | 1700 | 1.7 | 0.05 |
| c-7 | 1010 | 101 | 1717 | 1.7 | 0.10 |
| c-8 | 1000 | 200 | 1700 | 1.7 | 0.20 |
| c-9 | 1000 | 400 | 1700 | 1.7 | 0.40 |

In the atmosphere at 20°C, these sealed batteries were initially charged at 100 mA for 15 hours and discharged at 200 mA until the voltage fell to 1.0 V. Table 4 shows the values of Cp, Cn, and C'c after this single charging/discharging cycle. C'c is the value of the capacity of the pre-charged section of the negative electrode found when the sealed battery was broken apart after completion of a single charging/discharging cycle.

Table 4: Cp, Cn and C'c values after
charging/discharging single cycle

| Battery Nos. | Cp (mAh) | Cn (mAh) | C'c (mAh) | Cn+Cc (mAh) | C'c/Cp |
|---|---|---|---|---|---|
| c-1 | 1010 | 1010 | 100 | 1110 | 0.10 |
| c-2 | 1050 | 1275 | 300 | 1575 | 0.28 |
| c-3 | 1020 | 1022 | 100 | 1122 | 0.10 |
| c-4 | 1000 | 1700 | 300 | 2000 | 0.30 |
| c-5 | 920 | 1808 | 300 | 2208 | 0.33 |
| c-6 | 1000 | 1650 | 50 | 1700 | 0.05 |
| c-7 | 1010 | 1616 | 101 | 1717 | 0.10 |
| c-8 | 1000 | 1500 | 200 | 1700 | 0.20 |
| c-9 | 1000 | 1300 | 400 | 1700 | 0.40 |

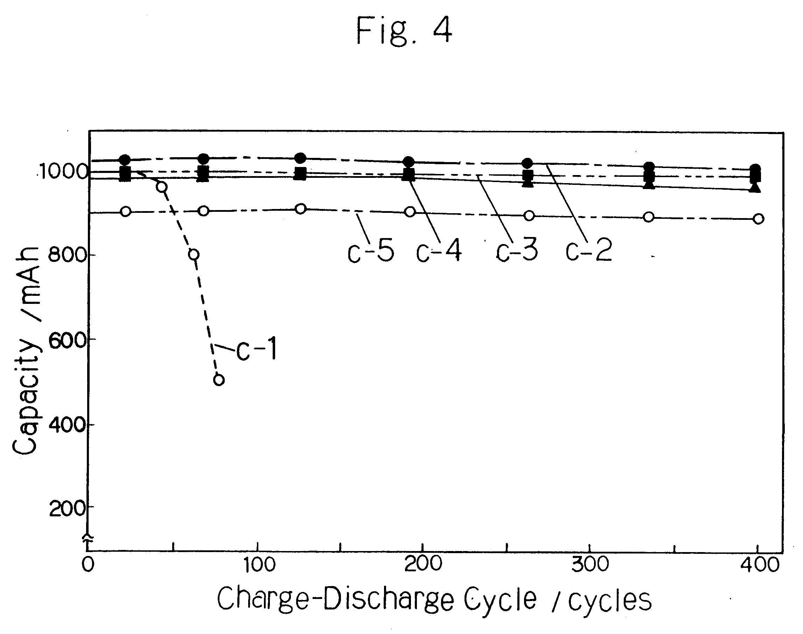

It is apparent from Figs. 3 and 4 that a pre-charged section C'c corresponding to Cc has appeared in the negative electrode after the first charge. If the cobalt powder is initially charged at a current density of more than 20 mA/cm$^2$, only the surface of the cobalt is oxidized and the charging potential then causes the oxidation of Ni(OH)$_2$ before the cobalt particles are fully oxidized through their thickness. Thus, when charging is carried out at a current density of more than 20 mA/cm$^2$, C'c will become so small that C'c corresponding to Cc may not be formed. A current density of less than 20 mA/cm$^2$ permits full oxidization of the inner portions of the cobalt powder, thereby establishing C'c corresponding to Cc in the negative electrode.

Fig. 4 illustrates the results of life tests carried out on batteries c-1, c-2, c-3, c-4, and c-5 of Table 3 with cycles of charging at 330 mA for 4.5 hours at 20°C and discharging at 500 mA until the voltage is reduced to 1.0 V. As is apparent from Fig. 4, the discharge capacity of battery c-1 is reduced to about 50% of the initial capacity after about 75 cycles. In case of batteries c-2, c-3, c-4, and c-5 which are in accordance with the present invention, 400 charge/discharge cycles causes no reduction in the discharge capacity. Deterioration of battery c-1 is due to the chargeable capacity Cn of the negative electrode necessary to keep the internal pressure of O$_2$ gas generated from the positive electrode constant at the final range of charge in such a manner that whereas the value of Cn/Cp is 1.09 before starting the initial charge, it is found to reduce to 1.0 at the end of the first charge/discharge cycle, and this leads to hydrogen gas being produced at the negative electrode. This causes an increase in the internal pressure inside the battery and, in turn, the actuation a safety vent present in the sealed battery (at 10 - 15 kg/cm$^2$). This causes an electrolyte or gas leakage and, in turn, the internal resistance of the battery increases with a consequential deterioration of the capacity. Although battery c-4 having a Cn/Cp value of 2.4 before the first charging operation presents an excellent performance in the charge/discharge cycle, its discharge capacity tends to decrease to some degree as compared with the other batteries in question. When the Cn/Cp value is more than 2.4, it is possible to make a battery having only less than 1.8 times the capacity of a nickel cadmium battery (capacity 500 - 600 mAh) of AA size using a sintered nickel positive electrode; such a battery is of less industrial value in view of its production cost.

As described above, it has been found that if the Cn/Cp value is less than 1.1 before starting the initial charge provided that the Cc value is 100 mAh, or if the value of Cn+Cc is less than 1.1 Cp after the completion of a complete charge and discharge cycle, the cycle life will become shorter, and if the Cn/Cp value is more than 2.4 before charging, and if Cn+Cc is more than 2.4 Cp after the first full charge and discharge cycle, the energy density will be reduced. Since the cobalt contained in the positive electrode forms a stable oxide by means of a low current charge of under 20 mA/cm$^2$, a precharge section C'c corresponding to Cc may be formed at the negative electrode by effecting a first charge and discharge so that a sealed battery can be obtained in which the capacity is limited by the positive electrode. It is only the charged section of cobalt formed in the initial charge that can be charged with a current density of 20 mA/cm$^2$, namely a current value less than the oxidization potential of Ni(OH)$_2$. Thus, if the initial charge is to be completed in a short period of time, it is preferred to carry out the charge with a large current of more than 20 mA/cm$^2$ after the pre-charging of the cobalt.

As described above, in accordance with the present invention, it is possible to provide the negative electrode with a precharged section by a simple process without the necessity of any formation steps (such as charge and discharge, or absorption and desorption of hydrogen) before the assembly of the battery and to obtain a sealed battery of large capacity. These batteries have an excellent high rate discharge characteristic and an extended life and are thus of substantial industrial value.

## Claims

1.  A sealed nickel-hydride battery which comprises :
    (i) a positive electrode comprising nickel hydroxide (Ni(OH)$_2$) as the active material thereof and cobalt and/or cobalt oxide having an oxidation potential lower than that of the nickel hydroxide,
    (ii) a negative electrode comprising a hydrogen-storing alloy capable of absorbing and desorbing hydrogen electrochemically, the negative electrode not having been subjected, prior to sealing of the battery, to sufficient pre-charging as is required to ensure the capacity of the battery is limited by the capacity of the positive electrode,
    (iii) an alkaline electrolyte, and
    (iv) a separator,
    characterised in that the cobalt and/or cobalt oxide present in the positive electrode is in the form of fine particles having an average particle size of 10μm or less.

2.  A sealed nickel-hydride battery according to claim 1, in which the positive electrode contains a proportion of said cobalt and/or cobalt oxide such that the chargeable capacity of the cobalt and/or cobalt oxide is from 0.1 to 0.4 times the chargeable capacity of the active materials of the positive electrode.

3. A sealed nickel-hydride battery according to claim 1 or 2, in which, prior to the sealing of the battery, the negative electrode has not been subjected to charging or discharging.

4. A sealed nickel-hydride battery according to any of claims 1 to 3, in which, prior to the sealing of the battery, the negative electrode has not been subjected to hydrogen absorption or desorption.

5. A process for making the sealed nickel-hydride battery of claim 1, in which:
   (i) the positive electrode is made by:
      (a) kneading a mixture of nickel hydroxide and cobalt and/or cobalt oxide having an oxidation potential lower than that of nickel hydroxide, the cobalt and/or cobalt oxide being in the form of fine particles having an average particle size of 10 $\mu$m or less, in a solvent to form a paste,
      (b) impregnating, applying or forcing the paste into or onto a supporter to form a plate, and
      (c) pressing the plate to a predetermined thickness and then drying it and cutting it to a predetermined size;
   (ii) the negative electrode is made by:
      (a) grinding the hydrogen-storing alloy into a powder,
      (b) kneading the powdered alloy in a solvent to obtain a paste and impregnating, applying or forcing the paste into or onto a supporter to form a plate, and
      (c) pressing the plate to a predetermined thickness and then drying it and cutting it to a predetermined size;
   (iii) forming an assembly comprising one or more positive electrode plates, one or more separators, one or more negative electrode plates, and an alkaline electrolyte in a container; and
   (iv) sealing the container.

6. A process according to claim 5, in which the nickel hydroxide used in the positive electrode consists of generally spherical particles having an average particle size of 10 to 30 $\mu$m.

7. A process according to claim 5 or 6, in which the composition of the hydrogen storing alloy is $MmNi_{x-y}M_y$, where Mm is a misch metal, M is one or more of Co, Al, Mn, Fe and Cr, and x > 3.5, y > O, and x+y has a value of from 4.7 to 5.3.

8. A process according to any of claims 5 to 7, in which the sealed battery is subjected to an initial charge to charge the cobalt and/or cobalt oxide present in the positive electrode and thereby simultaneously form a pre-charged section in the negative electrode.

9. A process according to claim 8, in which the initial charge is carried out with a current density sufficient to effect oxidation of the cobalt and/or cobalt oxide and insufficient to cause oxidation of the nickel hydroxide.

10. A process according to claim 9, in which the initial charge is carried out with a current density of less than 20 mA/cm$^2$.

11. A process according to any of claims 8 to 10, in which, at the termination of the initial charging of the cobalt and/or cobalt oxide or after a complete discharge of the battery, the sum of Cn and Cc is from 1.1 to 2.4 times Cp, where Cn is the chargeable capacity of the negative electrode, Cc is the chargeable capacity of the positive electrode, and Cp is the chargeable capacity of the active material of the positive electrode, the relationship Cn/Cp being from 1.1 to 2.4 before the beginning of the initial charge.

**Patentansprüche**

1. Eine versiegelte Nickelhybridbatterie, bestehend aus:
   (i) einer Pluselektrode, bestehend aus Nickelhydroxid (Ni(OH)$_2$) als aktives Material und Kobalt und/oder Kobaltoxid mit einem Oxidierungspotential unter dem des Nickelhydroxids,
   (ii) einer Minuselektrode, bestehend aus einer wasserstoffspeichernden Legierung mit der Fähigkeit, Wasserstoff elektrochemisch zu absorbieren und desorbieren, wobei die Minuselektrode vor Versiegelung in der Batterie keiner ausreichenden Vorladung ausgesetzt wurde, die zum Gewährleisten der Batterieleistung erforderlich ist, beschränkt durch die Leistungsfähigkeit der Pluselektrode;

(iii) einem alkalischen Elektrolyt und

(iv) einer Trennschicht;

dadurch gekennzeichnet, daß das Kobalt und/oder Kobaltoxid in der Pluselektrode die Form von feinen Partikeln mit durchschnittlicher Partikelgröße von 10μm oder kleiner nimmt.

2. Eine versiegelte Nickelhybridbatterie laut Anspruch 1, bei der die Pluselektrode einen Anteil besagten Kobalts und/oder Kobaltoxid beinhaltet, so daß sich eine Ladeleistung des Kobalts und/oder des Kobaltoxids von 0,1 bis 0,4-mal der Ladeleistung des aktiven Materials der Pluselektrode ergibt.

3. Eine versiegelte Nickelhybridbatterie laut Anspruch 1 oder 2, bei der die Minuselektrode, vor Versiegelung der Batterie, keiner Ladung oder Entladung ausgesetzt wird.

4. Eine versiegelte Nickelhybridbatterie laut einem der Ansprüche 1 bis 3, wobei die Minuselektrode, vor Versiegelung der Batterie, keiner Wasserstoffabsorption oder -desorption ausgesetzt wird.

5. Eine Vorgangsweise zur Herstellung der versiegelten Nickelhybridbatterie aus Anspruch 1, wobei:

(i) die Pluselektrode hergestellt wird durch

(a) Kneten einer Mischung aus Nickelhydroxid und Kobalt und/oder Kobaltoxid mit einem Oxidierungspotential unter dem des Nickelhydroxids, während das Kobalt und/oder Kobaltoxid zum Bilden einer Paste die Form von feinen Partikeln mit durchschnittlichen Partikelgröße von 10 μm oder kleiner in einem Lösungsmittel nimmt;

(b) Imprägnieren, Anwenden oder Forcieren der Paste in oder auf ein Trägerteil zum Bilden einer Platte und

(c) Pressen der Platte auf eine festgelegte Dicke und nachfolgendes Trocknen sowie Zuschneiden auf spezifisches Format;

(ii) die Minuselektrode wird hergestellt durch:

(a) Mahlen der wasserstoffspeichernden Legierung in ein Pulver;

(b) Kneten der pulverisierten Legierung in einem Lösungsmittel zum Bilden einer Paste und Imprägnieren, Auftragen und Forcieren der Paste auf ein Trägerteil zum Bilden einer Platte und

(c) Pressen der Platte auf festgelegte Dicke, anschließendes Trocknen und Zuschneiden auf spezifisches Format;

(iii) Bilden einer Baugruppe, bestehend aus einer oder mehreren Pluselektrodenplatten, einer oder mehrerer Trennschichten und einem alkalischen Elektrolyt in einem Behälter und

(iv) Versiegeln des Behälters.

6. Eine Vorgangsweise nach Anspruch 5, wobei das in der Pluselektrode benutzte Nickelhydroxid allgemein aus sphärischen Partikeln mit durchschnittlicher Partikelgröße zwischen 10 bis 30 μm besteht.

7. Eine Vorgangsweise nach Anspruch 5 oder 6, wobei die Zusammensetzung der wasserstoffspeichernden Legierung $MmNi_{x-y}M_y$ ist, wobei Mn ein Mischmetall, M eines oder mehrere von Co, Al, Mn, Fe und Cr ist und x > 3,5; y > O und x+y einen Wert von 4,7 bis 5,3 darstellen.

8. Eine Vorgangsweise nach einem der Ansprüche 5 bis 7, wobei die versiegelte Batterie einer ersten Ladung zum Aufladen des Kobalts und/oder Kobaltoxids, das in der Pluselektrode enthalten ist, ausgesetzt wird, wodurch sich gleichzeitig ein vorgeladener Abschnitt in der Minuselektrode bildet.

9. Eine Vorgangsweise nach Anspruch 8, wobei die erste Ladung mit ausreichend Stromdichte durchgeführt wird, um ein Oxidieren des Kobalts und/oder des Kobaltoxids herbeizuführen, während die Stromdichte nicht ausreicht, um ein Oxidieren des Nickelhydroxids herbeizuführen.

10. Eine Vorgangsweise nach Anspruch 9, wobei die erste Ladung mit einer Stromdichte von unter 20 mA/cm$^2$ durchgeführt wird.

11. Eine Vorgangsweise nach einem der Ansprüche 8 bis 10, wobei, beim Anklemmen der ersten Ladung des Kobalts und/oder Kobaltoxids oder nach komplettem Entladen der Batterie, die Summe von Cn und Cc zwischen 1,1 bis 2,4-mal Cp ausfällt; dabei ist Cn die Ladefähigkeit der Minuselektrode, Cc die Ladefähigkeit der Pluselektrode und Cp die Ladefähigkeit des aktiven Materials der Pluselektrode, während das Verhältnis Cn/Cp vor Beginn der ersten Ladung zwischen 1,1 und 2,4 liegt.

## Revendications

1.  Une batterie étanche à l'hydrure de nickel qui se compose de:
    (i) une électrode positive de l'hydrate de nickel (Ni(OH)$_2$) en tant que matériau actif de la même et du cobalt et/ou de l'oxyde de cobalt ayant un potentiel d'oxydation inférieur à celui de l'hydroxyde de nickel,
    (ii) une électrode négative comprenant un alliage emmagasinant l'hydrogène, capable d'absorber et de désorber électrochimiquement l'hydrogène, l'électrode négative n'ayant pas été soumise, avant la fermeture de la batterie, à une précharge suffisante comme il est nécessaire pour assurer que la capacité de la batterie soit limitée par la capacité de l'électrode positive,
    (iii) un électrolyte alcalin, et
    (iv) un séparateur,
    caractérisé par le fait que le cobalt et/ou l'oxyde de cobalt présent dans l'électrode positive est sous forme de particules fines ayant une dimension moyenne de particules de 10 μm ou moins.

2.  Une batterie étanche à l'hydrure de nickel, conformément à la revendication 1, dans laquelle l'électrode positive contient une proportion du cobalt en question et/ou de l'oxyde de cobalt tel que la capacité chargeable du cobalt et/ou de l'oxyde de cobalt soit entre 0,1 et 0,4 fois la capacité chargeable des matériaux actifs de l'électrode positive.

3.  Une batterie étanche à l'hydrure de nickel, conformément à la revendication 1 ou 2, dans laquelle, avant la fermeture de la batterie, l'électrode négative n'a pas été soumise à un charge ou une décharge.

4.  Une batterie étanche à l'hydrure de nickel, conformément à une quelconque des revendication 1 à 3, dans laquelle, avant la fermeture de la batterie, l'électrode négative n'a pas été soumise à l'absorption ni la désorption de l'hydrogène.

5.  Un procédé pour faire la batterie étanche à l'hydrure de nickel de la revendication 1, dans lequel:
    (i) l'électrode positive est faite par:
    (a) pétrissage d'un mélange d'hydroxyde de nickel et de cobalt et/ou d'oxyde de cobalt ayant un potentiel d'oxydation plus faible que celui de l'hydroxyde de nickel, le cobalt et/ou l'oxyde de cobalt étant sous forme de fines particules ayant une dimension moyenne de particules de 10μm ou moins, dans un solvant sous forme de pâte,
    (b) imprégnation, application ou forçage de la pâte dans ou sur un support pour former une plaque, et
    (c) compression de la plaque en une épaisseur prédéterminée suivie de séchage et de coupe en une dimension prédéterminée;
    (ii) l'électrode négative est faite en :
    (a) broyant l'alliage emmagasinant l'hydrogène en une poudre,
    (b) pétrissant l'alliage en poudre dans un solvant pour obtenir une pâte et en imprégnant, appliquant ou forçant la pâte dans ou sur un support pour former une plaque, et
    (c) en comprimant la plaque en une épaisseur prédéterminée suivie de séchage et de découpe en une dimension prédéterminée;
    (iii) formant un assemblage comprenant une ou plusieurs plaques d'électrodes positives, un ou plusieurs séparateurs, une ou plusieurs électrodes négatives et un électrolyte alcalin dans un boîtier; et
    (iv) en fermant le boîtier de manière étanche.

6.  Un procédé selon la revendication 5, dans lequel l'hydroxyde de nickel utilisé dans l'électrode positive consiste en particules généralement sphérique ayant une dimension moyenne de particules de 10 à 30 μm.

7.  Un procédé selon la revendication 5 ou 6 dans lequel la composition de l'alliage emmagasinant l'hydrogène est $MnNi_{x-y}M_y$ dans lequel Mm est un mischmétal, M est un ou plusieurs parmi Co, Al, Mn, Fe et Cr, et x > 3,5, y > O et x+y a une valeur d'entre 4,7 et 5,3.

8. Un procédé selon n'importe quelle revendication de 5 à 7, dans lequel la batterie étanche est soumise à une charge initiale pour charger le cobalt et/ou l'oxyde de cobalt présent dans l'électrode positive et de ce fait, forme une section préchargée dans l'électrode négative.

9. Un procédé selon la revendication 8, dans lequel la charge initiale est effectuée avec une densité de courant suffisante pour effectuer l'oxydation du cobalt et/ou de l'oxyde de cobalt et insuffisante pour causer l'oxydation de l'hydroxyde de nickel.

10. Un procédé selon la revendication 9, dans lequel la charge initiale est effectuée avec une densité de courant de moins de 20 mA/cm$^2$.

11. Un procédé selon n'importe quelle revendication de 8 à 10, dans lequel, à la fin de la charge initiale du cobalt et/ou de l'oxyde de cobalt ou après une décharge complète de la batterie, la somme de Cn et Cc est entre 1,1 et 2,4 fois Cp, dans lequel Cn est la capacité chargeable de l'électrode négative, Cc est la capacité chargeable de l'électrode positive, et Cp est la capacité chargeable du matériau actif de l'électrod positive, le rapport Cn/Cp étant entre 1,1 et 2,4 avant le début de la charge initiale.

# Fig. 1

7 SAFETY VENT
POSITIVE LEAD, 10
SEALING PLATE, 11
9 POSITIVE TERMINAL (+)
12 INSULATING GASKET
5 INSULATOR
3 SEPARATOR
4 CASE (−)
6 INSULATOR
2 POSITIVE ELECTRODE
1 NEGATIVE ELECTRODE
3 SEPARATOR

Fig. 2

Fig. 3

Fig. 4